(19) Europäisches Patentamt
European Patent Office
Office européen des brevets

(11) Publication number: 0 023 089 B1

(12) **EUROPEAN PATENT SPECIFICATION**

(45) Date of publication of patent specification: **30.05.84**

(51) Int. Cl.$^3$: **C 01 B 33/28**, B 01 J 29/28

(21) Application number: **80302113.8**

(22) Date of filing: **24.06.80**

(54) **Method of preparing zeolite ZSM-48, the zeolite so prepared and its use as catalyst for organic compound conversion.**

(30) Priority: **12.07.79 US 56754**

(43) Date of publication of application:
**28.01.81 Bulletin 81/04**

(45) Publication of the grant of the patent:
**30.05.84 Bulletin 84/22**

(84) Designated Contracting States:
**BE DE FR GB IT NL**

(56) References cited:
**EP-A-0 015 132**
**DE-A-2 817 577**
**GB-A-1 365 318**
**GB-A-2 002 733**
**US-A-3 941 871**
**US-A-4 061 724**
**US-A-4 073 865**
**US-A-4 104 294**

(73) Proprietor: **MOBIL OIL CORPORATION**
**150 East 42nd Street**
**New York New York 10017 (US)**

(72) Inventor: **Chu, Pochen**
**1173 Ollerton Road**
**West Deptford, New Jersey (US)**

(74) Representative: **West, Alan Harry et al**
**Mobil Court 3 Clements Inn**
**London WC2A 2EB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 023 089 B1

**Description**

This invention relates to a method for the preparation of the relatively new zeolite designated ZSM-48. The zeolite, which is one of those which can be prepared from reaction mixtures to which no aluminium has been added, is described in our copending European Application No. 80300463 (publication number EP—A—0 015 132).

The $SiO_2/Al_2O_3$ ratio of a given zeolite is often variable. For example, zeolite X can be synthesized with $SiO_2/Al_2O_3$ ratios from 2 to 3; zeolite Y, from 3 to about 6. In some zeolites the upper limit of $SiO_2/Al_2O_3$ ratio is unbounded. ZSM-5 is one such example wherein $SiO_2/Al_2O_3$ ratio is at least five. U.S. Patent 3,941,871 discloses a crystalline metal organosilicate essentially free of aluminium and exhibiting an X-ray diffration pattern characteristic of ZSM-5 type aluminosilicates. U.S. Patents 4,061,724, 4,073,865 and 4,104,294 describe microporous, crystalline silicas or organosilicates.

According to our aforesaid prior European Application ZSM-48 is defined as a crystalline zeolitic material having a lattice comprising $SiO_2$ tetrahedra crosslinked by the sharing of oxygen atoms and characterized by the following interplanar spacings and relative intensities of its X-ray diffraction pattern:

TABLE 1

| d(A) | Relative intensity ($I/I_o$) |
|---|---|
| 11.8±0.2 | S |
| 10.2±0.2 | W—M |
| 7.2±0.15 | W |
| 4.2±0.08 | VS |
| 3.9±0.08 | VS |
| 3.6±0.06 | W |
| 3.1±0.05 | W |
| 2.85±0.05 | W |

These values were determined by standard techniques. The radiation was the K-alpha doublet of copper, and a diffractometer equipped with a scintillation counter and a strip chart pen recorder was used. The peak heights, I, and the positions as a function of 2 times theta, where theta is the Bragg angle, were read from the spectrometer chart. From these, the relative intensities, 100 $I/I_o$, where $I_o$ is the intensity of the strongest line or peak, and d (obs.), the interplanar spacing in A, corresponding to the recorded lines, were calculated. In Table 1 the relative intensities are given in terms of the symbols W=weak S=strong VS=very strong, and W—M=weak-to-medium (depending on the cationic form). Ion exchange of the sodium ion form in which the zeolite is synthesised with cations reveals substantially the same pattern with some minor shifts in interplanar spacing and variation in relative intensity. Other minor variations can occur depending on the silicon to aluminium ratio of the particular sample, as well as if it has been subjected to thermal treatment.

When synthesised according to the preferred techniques disclosed in our prior European application ZSN-48 usually crystallized in a form satisfying the formula, in mole ratios of oxides:

$$(0 \text{ to } 15)RN: (0 \text{ to } 1.5)M_{2}/_{n}O: (0 \text{ to } 2)Al_2O_3: (100)SiO_2$$

in which M is at least one cation of valence n and RN is an organic compound having at least one amine functional group of $pk_a \geqslant 7$.

For the purposes of the present specification, however, a convenient compositional formula which embraces most forms of ZSM-48 synthesised by the method of the present invention, expressed in terms of moles of anhydrous oxides per 100 moles of silica, is as follows:

$$(0.1 \text{ to } 10)(RN)_2O: (0.1 \text{ to } 10)M_2O: (0 \text{ to } 4)Al_2O_3: (100)SiO_2$$

wherein M is at least one alkali metal cation and RN is a mixture of a quaternary ammonium compound and a $C_2$—$C_{12}$ alkylamine.

According to the present invention, there is provided a method for preparing the crystalline zeolitic material ZSM-48 having a lattice comprising $SiO_4$ tetrahedra crosslinked by the sharing of oxygen atoms, having the compositional formula given immediately above and being characterized by an X-ray diffraction pattern showing the interplanar spacings and relative intensities given above, the method comprising preparing a reaction mixture containing a source of silica, RN, an alkali metal oxide, e.g. sodium, and water but no source of added alumina and having a composition in terms of mole ratios of oxides falling within the following ranges:

| Reactants | Broad | Preferred |
|---|---|---|
| $Al_2O_3/SiO_2$ | =0 to 0.08 | 0 to 0.02 |
| $M_2O/SiO_2$ | =0.01 to 1.0 | 0.1 to 0.5 |
| $(RN)_2O/SiO_2$ | =0.01 to 1.0 | 0.01 to 0.5 |
| $OH^-/SiO_2$ | =0.01 to 0.5 | 0.05 to 0.2 |
| $H_2O/SiO_2$ | =10 to 200 | 20 to 100 |

in which M is an alkali metal and RN is a mixture of a quaternary ammonium compound and $C_2$—$C_{12}$ alkylamine; and maintaining the mixture until crystals of the zeolite are formed.

It will be noted that although the reaction mixture from which the zeolite is crystallized contains no sources of added alumina, the crystalline zeolite product may contain alumina in relatively small amounts. Any such relatively small amount of alumina that may be present in the crystalline zeolite originates as an impurity in one or more of the ingredients used to prepare the reaction mixture, usually the source of silica.

The original cations of the zeolite can be replaced, at least in part, by calcination and/or ion exchange with another cation. Thus, the original cations are exchanged into a hydrogen or hydrogen ion precursor form or a form in which the original cation has been replaced by a metal of Groups 2 through 8 of the Periodic Table. Thus, for example, it is contemplated to exchange the original cations with ammonium ions or with hydronium ions. Catalytically active forms of these would include, in particular, hydrogen, rare earth metals, aluminum, metals of Groups II and VIII of the Periodic Table and manganese.

ZSM-48 can also be used as a catalyst in intimate combination with an additional hydrogenating component such as tungsten, vanadium, molybdenum, rhenium, nickel, cobalt, chromium, manganese, or a noble metal such as platinum or palladium where a hydrogenation-dehydrogenation function is to be performed. Such component can be exchanged into the composition, to the extent as in the structure impregnated therein or physically intimately admixed therewith. Such component can be impregnated, into or onto it, for example, in the case of platinum, by treating the zeolite with a solution containing a platinum metal-containing ion. Thus, suitable platinum compounds include chloroplatinic acid, platinous chloride and various compounds containing the platinum amine complex.

Especially in its metal, hydrogen, ammonium, alkylammonium and arylammonium forms the zeolite can be beneficially converted to another form by thermal treatment. This thermal treatment is generally performed by heating one of these forms at a temperature of at least 388°C for at least 1 minute and generally not greater than 20 hours. While subatmospheric pressure can be employed for the thermal treatment, atmospheric pressure is desired for reasons of convenience. The thermal treatment can be performed at a temperature of 927°C. The thermally treated product is particularly useful in the catalysis of certain hydrocarbon conversion reactions.

When employed either as an absorbent or as a catalyst in one of the aforementioned processes zeolite ZSM-48 should be dehydrated, at least partially. This can be done by heating to a temperature in the range of 200 to 600°C in an atmosphere, such as air, nitrogen, etc. and at atmospheric, subatmospheric or superatmospheric pressures for between 1 and 48 hours. Dehydration can also be performed at room temperature merely by placing the zeolite in a vacuum, but a longer time is required to obtain a sufficient amount of dehydration.

Preferably, crystallization is carried out under pressure in an autoclave or static bomb reactor, at 80 to 200°C. Thereafter, the crystals are separated from the liquid and recovered. The composition can be prepared utilizing materials which supply the appropriate oxide. Such compositions include sodium silicate, silica hydrosol, silica gel, silicic acid, sodium hydroxide, chromic potassium sulfate.

The zeolite prepared by the present invention may form in a wide variety of particle sizes. Generally speaking, the particles can be in the form of a powder, a granule, or a molded product, such as an extrudate having a particle size sufficient to pass through a 2 mesh (Tyler) screen (9.423 mm) and be retained on a 400 mesh (Tyler) screen (38 $\mu$m). In cases where a catalyst is molded, such as by extrusion, the zeolite can be extruded before drying or dried or partially dried and then extruded. For catalytic usage ZSM-48 may be composited with a matrix such as described in our European Specification 0,001,695.

In order to more fully illustrate the nature of the invention and the manner of practising same, the following examples are presented, wherein porous ZSM-48 crystals of good crystallinity were prepared from mixes of the composition range:

$$(1 \text{ to } 100)(RN)_2O: (1 \text{ to } 100)Na_2O: (0 \text{ to } 8)Al_2O_3: 100\ SiO_2: (1000 \text{ to } 20{,}000)H_2O$$

wherein RN is a mixture of a quaternary ammonium compound and a $C_2$—$C_{12}$ alkylamine. Adsorption data were determined as follows:

A weighed sample of the calcined composition was contacted with the desired pure adsorbate vapor in an adsorption chamber, evacuated to less than 133 Pa and then contacted with 1600 Pa water vapor or 2666 Pa cyclohexane or n-hexane vapor, pressures less than the vapor-liquid equilibrium pressure of the respective adsorbate at room temperature. The pressure was kept constant (within about ±67 Pa) by addition of adsorbate vapor controlled by a manostat during the adsorption period which did not exceed about eight hours. As the adsorbate was adsorbed by the zeolite, the decrease in pressure caused the manostat to open a valve which admitted more adsorbate vapor to the chamber to restore the above control pressures. Sorption was complete when the pressure change was not sufficient to activate the manostat. The increase in weight was calculated as the adsorption capacity of the sample.

Example 1

A silicate solution comprising 1718 grams of Q-brand sodium silicate (28.8% $SiO_2$, 8.9% $Na_2O$, 62% $H_2O$) and 4000 g of water, an acid solution comprising 172 g of $H_2SO_4$. 600 g of 50% wt. tetramethylammonium chloride and 4100 g $H_2O$, and 800 g of n-propylamine, were charged to a 5-gallon autoclave the silicate and acid solutions being charged first. After approximately 46 hours at 160°C with 90 rpm agitation, the reaction mixture crystallized into a product of mainly ZSM-48 material, in the shape of needles. Some other material was also found, octahedral in shape, apparently a metastable precursor of ZSM-48.

Elemental analysis was as follows:

| | |
|---|---|
| Na | 0.27% |
| Si | 93.2% |
| Al | 0.40% |
| N | 0.18% |

Adsorption Capacity was as follows:

| | |
|---|---|
| $H_2O$ | 1.8% |
| Cyclohexane | 0.3% |
| n-hexane | 3.7% |

The following Table II shows the x-ray diffraction data of the product after separation to remove impurities and calcination.

TABLE II
X-ray data for product of Example 1 calcined 21 hours at 500°C

| 2 times theta | D(A) | 100 I/Io |
|---|---|---|
| 7.48 | 11.82 | 74 |
| 8.67 | 10.20 | 29 |
| 12.30 | 7.20 | 7 |
| 12.83 | 6.90 | 3 |
| 14.50 | 6.11 | 7 |
| * 15.10 | 5.87 | 20 |
| * 15.78 | 5.62 | 4 |
| 16.75 | 5.29 | 1 |
| 17.55 | 5.05 | 2 |
| 18.14 | 4.89 | 2 |
| 18.60 | 4.77 | 1 |
| 19.02 | 4.67 | 1 |
| 19.90 | 4.46 | 2 |
| 20.52 | 4.33 | 2 |
| 21.06 | 4.22 | 82 |
| 21.75 | 4.09 | 9 |
| 22.25 | 4.00 | 8 |
| 22.83 | 3.90 | 100 |
| 23.80 | 3.74 | 3 |
| 24.55 | 3.63 | 3 |
| 24.80 | 3.59 | 4 |
| 25.70 | 3.47 | 3 |
| 26.45 | 3.37 | 4 |
| * 27.22 | 3.28 | 4 |
| 27.67 | 3.22 | 1 |
| 29.02 | 3.08 | 4 |
| 30.67 | 2.91 | 1 |
| 31.36 | 2.85 | 14 |
| 32.77 | 2.73 | 3 |
| 34.12 | 2.63 | 2 |
| 35.62 | 2.52 | 3 |
| 36.13 | 2.49 | 3 |
| 36.48 | 2.46 | 4 |
| 37.85 | 2.38 | 4 |
| 38.30 | 2.35 | 3 |
| 40.30 | 2.24 | 2 |
| 43.05 | 2.10 | 3 |
| 44.00 | 2.06 | 3 |

*Intensity due to or enhanced by other components(s).

Example 2

Fifty grams of the dried zeolite product from Example 1 were calcined in $N_2$ stream at 538°C for 3 hours to decompose most of the organics associated with the zeolite. Two $NH_4$ ion exchanges were carried out at room temperature with 5cc of 1N $NH_4NO_3$ solution per gram of sample for one hour each to reduce Na level of the sample to <0.02 wt.%. The ion exchanged sample was washed, dried and sized to 14/25 mesh (1.41 mm/0.71 mm) prior to the final air activation step of 3 hours to 538°C. One cc of the above activated sample was tested for its hydrocarbon-cracking activities by the standard alpha-test* and was found to have an alpha-value of 6.4.

(The alpha test is described in Journal of Catalysis, Vol. 4, pp. 522—529 (August 1965)).

Example 3

Five grams of the dried zeolite product from Example 1 were calcined in $N_2$ stream at 538°C for 3 hours. The calcined sample was ion exchanged twice with a mixed solution of 100 ml 0.1N NaCl and 50 ml 0.1N NaOH at room temperature for one hour each. The Na form sample was filtered, water washed and finally dried at 110°C for at least 3 hours.

The X-ray diffraction data of the calcined sodium-exchanged product is given below in Table III.

TABLE III

| 2 Times theta | D(A) | 100 I/Io |
|---|---|---|
| 7.55 | 11.71 | 51 |
| 8.72 | 10.14 | 22 |
| 12.36 | 7.16 | 6 |
| 12.93 | 6.85 | 3 |
| 14.54 | 6.09 | 8 |
| * 15.14 | 5.85 | 21 |
| * 15.84 | 5.59 | 5 |
| 17.60 | 5.04 | 3 |
| 18.17 | 4.88 | 4 |
| 18.68 | 4.75 | 2 |
| 19.10 | 4.65 | 2 |
| 19.56 | 4.54 | 2 |
| 20.02 | 4.44 | 4 |
| 20.48 | 4.34 | 4 |
| 21.09 | 4.21 | 74 |
| 21.72 | 4.09 | 11 |
| 22.22 | 4.00 | 11 |
| 22.88 | 3.89 | 100 |
| * 23.89 | 3.72 | 10 |
| 24.47 | 3.64 | 5 |
| 24.89 | 3.58 | 10 |
| 25.38 | 3.51 | 7 |
| 25.80 | 3.45 | 7 |
| 26.17 | 3.41 | 4 |
| 26.52 | 3.36 | 8 |
| * 27.22 | 3.28 | 5 |
| 29.06 | 3.07 | 3 |
| 30.72 | 2.91 | 1 |
| 31.40 | 2.85 | 11 |
| 32.65 | 2.74 | 1 |
| 32.98 | 2.72 | 2 |
| 33.53 | 2.67 | 1 |
| 34.19 | 2.62 | 1 |
| 35.67 | 2.52 | 2 |
| 36.20 | 2.48 | 3 |
| 36.60 | 2.46 | 2 |
| 37.06 | 2.43 | 2 |
| 37.55 | 2.40 | 2 |
| 37.94 | 2.37 | 4 |
| 38.34 | 2.35 | 2 |
| 39.52 | 2.28 | 1 |
| 40.30 | 2.24 | 1 |
| 43.10 | 2.10 | 2 |
| 44.06 | 2.06 | 2 |

*Intensity due to or enhanced by other components(s).

**Claims**

1. A method for preparing the crystalline zeolitic material ZSM-48 having a lattice comprising $SiO_4$ tetrahedra crosslinked by the sharing of oxygen atoms, having the compositional formula expressed in terms of moles of anhydrous oxides per 100 moles of silica, as follows:

$$(0.1 \text{ to } 10)(RN)_2O: (0.1 \text{ to } 10(M_2O: (0 \text{ to } 4)Al_2O_3: (100)SiO_2$$

wherein M is at least one alkali metal cation and RN is a mixture of a quaternary ammonium compound and a $C_2$—$C_{12}$ alkylamine, and being characterized by the following interplanar spacings and relative intensities of it X-ray diffraction pattern:

| d(A) | Relative intensity |
|---|---|
| 11.8±0.2 | S |
| 10.2±0.2 | W—M |
| 7.2±0.15 | W |
| 4.2±0.08 | VS |
| 3.9±0.08 | VS |
| 3.6±0.06 | W |
| 3.1±0.05 | W |
| 2.85±0.05 | W |

the method comprising preparing a reaction mixture containing a source of silica, an alkali metal oxide, RN and water but no source of added alumina and having a composition in terms of mole ratios of oxides falling within the following ranges:

$Al_2O_3/SiO_2$ =0 to 0.08
$M_2O/SiO_2$ =0.01 to 1.0
$(RN)_2O/SiO_2$=0.01 to 1.0
$OH^-/SiO_2$ =0.01 to 0.5
$H_2O/SiO_2$ =10 to 200

in which M and RN have the meanings given above, and maintaining the mixture until crystals of the zeolite are formed.

2. A method according to claim 1, wherein the reaction mixture has a composition in terms of mole ratios of oxides falling within the following ranges:

$Al_2O_3/SiO_2$ =0 to 0.02
$M_2O/SiO_2$ =0.1 to 0.5
$(RN)_2O/SiO_2$=0.1 to 0.5
$OH^-_2/SiO_2$ =0.05 to 0.2
$H_2O/SiO_2$ =20 to 100

3. A method according to claim 1 or claim 2, wherein RN comprises n-propylamine and tetramethylammonium chloride.

4. A method according to any one of claims 1 to 3, wherein the reaction mixture is maintained at a temperature of 80 to 200°C until crystals are formed.

**Patentansprüche**

1. Ein Verfahren zur Herstellung des kristallinen zeolithischen Materials ZSM-48, das ein Gitter mit $SiO_4$-Tetraedern, die über gemeinsame Sauerstoffatome miteinander verknüpft sind, sowie die folgende Zusammensetzungs-Formel, ausgedrückt als Mole wasserfreie Oxide pro 100 Mole Siliciumdioxid, aufweist:

$$(0{,}1 \text{ bis } 10)(RN)_2O : (0{,}1 \text{ bis } 10)M_2O : (0 \text{ bis } 4)Al_2O_3 : (100)SiO_2$$

worin M wenigstens ein Alkalimetall-Kation ist und RN eine Mischung aus einer quaternären Ammoniumverbindung und einem $C_2$—$C_{12}$-Alkylamin ist, und das außerdem durch die folgenden Netzebenen-Abstände und Relativintensitäten seines Röntgenbeugungsmusters charakterisiert ist:

| d(A) | Relativintensitäten |
|---|---|
| 11,8±0,2 | stark |
| 10,2±0,2 | schwach-mittel |
| 7,2±0,15 | schwach |
| 4,2±0,08 | sehr stark |
| 3,9±0,08 | sehr stark |
| 3,6±0,06 | schwach |
| 3,1±0,05 | schwach |
| 2,85±0,05 | schwach |

wobei das Verfahren die Herstellung einer Reaktionsmischung umfaßt, die eine Quelle für Siliciumdioxid, ein Alkalimetalloxid, RN sowie Wasser enthält, jedoch keine Quelle für einen Aluminumoxid-Zusatz, und die ausgedrückt in Mol-Verhältnissen der Oxide eine Zusammensetzung aufweist, die in die folgenden Bereiche fällt:

$Al_2O_3/SiO_2$ =0 bis 0,08
$M_2O/SiO_2$ =0,01 bis 1,0
$(RN)_2O/SiO_2$ =0,01 bis 1,0
$OH^-/SiO_2$ =0,01 bis 0,5
$H_2O/SiO_2$ =10 bis 200

wobei M und RN die obigen Bedeutungen aufweisen, und das Halten dieser Mischung, bis sich Kristalle des Zeolithen gebildet haben.

2. Ein Verfahren nach Anspruch 1, bei dem die Reaktionsmischung ausgedrückt als Mol-Verhältnisse der Oxide eine Zusammensetzung aufweist, die in die folgenden Bereiche fällt:

$Al_2O_3/SiO_2$ =0 bis 0,02
$M_2O/SiO_2$ =0,1 bis 0,5
$(RN)_2O/SiO_2$ =0,1 bis 0,5
$OH^-/SiO_2$ =0,05 bis 0,2
$H_2O/SiO_2$ =20 bis 100.

3. Ein Verfahren nach Anspruch 1 oder Anspruch 2, bei dem RN n-Propylamin und Tetramethylammoniumchlorid umfaßt.

4. Ein Verfahren nach einem der Ansprüche 1 bis 3, bei dem die Reaktionsmischung bei einer Temperatur von 80 bis 200°C gehalten wird, bis sich Kristalle gebildet haben.

**Revendications**

1. Procédé pour préparer la zéolite cristalline ZSM-48 ayant un réseau comprenant des téraèdres $SiO_4$ réticulés par la mise en commun d'atomes d'oxygène, ayant la formule de composition suivante exprimée en moles d'oxydes anhydres par 100 moles de silice:

$$(0{,}1 \text{ à } 10)(RN)_2O: (0{,}1 \text{ à } 10)M_2O: (0 \text{ à } 4)Al_2O_3: (100)SiO_2$$

dans laquelle M est au moins un cation de métal alcalin et RN est un mélange d'un composé d'ammonium quaternaire et d'une alkylamine en $C_2$—$C_{12}$, et caractérisée par les distances interplanaires suivantes et les intensités relatives suivantes de son diagramme de diffraction des rayons X:

| d(A) | Intensité relative |
|---|---|
| 11,8±0,2 | forte |
| 10,2±0,2 | faible-moyenne |
| 7,2±0,15 | faible |
| 4,2±0,08 | très forte |
| 3,9±0,08 | très forte |
| 3,6±0,06 | faible |
| 3,1±0,05 | faible |
| 2,85±0,05 | faible |

le procédé consistant à préparer un mélange de réaction contenant une source de silice, un oxyde de métal alcalin, RN et de l'eau mais pas de source d'alumine ajoutée et ayant une composition comprise dans les gammes suivantes, en rapports molaires d'oxydes:

$Al_2O_3/SiO_2$ =0 à 0,08
$M_2O/SiO_2$ =0,01 à 1,0
$(RN)_2OSiO_2$ =0,01 à 1,0
$OH^-/SiO_2$ =0,01 à 0,5
$H_2O/SiO_2$ =10 à 200

où M et RN ont les significations indiquées ci-dessus, et à maintenir le mélange jusqu'à ce qu'il se forme des cristaux de la zéolite.

2. Procédé selon la revendication 1, dans lequel le mélange de réaction a une composition dans les gammes suivantes, en rapports molaires d'oxydes:

$Al_2O_3/SiO_2$ =0 à 0,02
$M_2O/SiO_2$ =0,1 à 0,5
$(RN)_2O/SiO_2$ =0,1 à 0,5
$OH^-/SiO_2$ =0,05 à 0,2
$H_2O/SiO_2$ =20 à 100

3. Procédé selon la revendication 1 ou 2, dans lequel RN consiste en n-propylamine et chlorure de tétraméthylammonium.

4. Procédé selon l'une quelconque des revendications 1 à 3, dans lequel le mélange de réaction est maintenu à une température de 80 à 200°C jusqu'à ce que les cristaux soient formés.